# EUROPÄISCHE PATENTSCHRIFT

(11) **EP 0 354 498 B1**
(45) Veröffentlichungstag und Bekanntmachung des Hinweises auf die Patenterteilung: **20.10.1999**
(21) Anmeldenummer: 89114490.9
(22) Anmeldetag: 05.08.1989
(51) Int. Cl.: C08L 63/00, C08G 59/40, C09J 163/00, C08G 59/10

(54) **Reaktiver Schmelzklebstoff**
Reactive fusible glue
Colle fusible réactive

(30) Priorität: 10.08.1988 DE 3827626
(43) Veröffentlichungstag der Anmeldung: 14.02.1990
(73) Patentinhaber: Henkel Teroson GmbH, 69123 Heidelberg (DE)
(72) Erfinder: Schenkel, Hubert, Dr., D-6902 Sandhausen (DE)
(74) Vertreter: Mathes, Nikolaus, Dr.

(56) Entgegenhaltungen:
- FR-A- 2 125 244
- US-A- 3 299 169
- DATABASE WPIL, no. 82-00919J, Derwent Publications Ltd, London, GB; & JP-A-57 167 370 (MITSUI PETROCHEM.) 15-10-1982
- DATABASE WPIL, no. 86-098069, Derwent Publications Ltd, London, GB; & JP-A-61 043 615 (MITSUI PETROCHEM.) 03-03-1986

## Beschreibung

Die Erfindung betrifft einen reaktiven Schmelzklebstoff, der eine Harzkomponente, mindestens einen thermisch aktivierbaren latenten Härter für die Harzkomponente sowie gegebenenfalls Beschleuniger, Füllstoffe, Thixotropiehilfsmittel und weiter übliche Zusatzstoffe enthält. Die Erfindung betrifft auch ein Verfahren zur Herstellung von reaktiven Schmelzklebstoffen sowie deren Verwendung. Schließlich betrifft die Erfindung ein Harz, das als Ausgangsmaterial bzw. Zwischenprodukt für die Herstellung eines Schmelzklebstoffs geeignet ist, sowie dessen Herstellung und Verwendung.

Schmelzklebstoffe der eingangs genannten Art sind bekannt. Beispielsweise werden in der Automobilindustrie reaktive Schmelzklebstoffe auf Epoxidbasis verwendet. Diese bekannten Epoxidklebstoffe sind im ausgehärteten Zustand nur wenig flexibel. Die mit ihnen erhaltenen Verklebungen weisen zwar eine hohe Zugscherfestigkeit auf, platzen aber beim Abschälen leicht ab. Es ist ein bekanntes Problem, daß in vielen Fällen Klebstoffe, mit denen sich hohe Zugscherfestigkeiten erzielen lassen, nur zu geringen Winkelschälfestigkeiten führen.

Bei dem Verkleben von Blechen in der Automobilindustrie wird häufig so vorgegangen, daß der Klebstoff zunächst warm appliziert, aber noch nicht ausgehärtet wird. Beim Abkühlen erstarrt der Klebstoff und schafft eine vorläufige Verbindung. Die so miteinander verbundenen Bleche werden in Wasch-und Phosphatierbädern behandelt. Erst anschließend wird der Klebstoff in einem Ofen gehärtet. Es besteht daher ein Bedürfnis nach Schmelzklebstoffen, die bereits vor der Aushärtung eine ausreichende Auswaschbeständigkeit aufweisen.

Aus der DE-A-32 02 300 ist es bekannt, Epoxidharzen zur Erhöhung der Flexibilität Polyole zuzusetzen.

In der DE-A-34 09 181 sind mit Alkoholen modifizierte Epoxidharze beschrieben.

Aus der EP-A 0 130 741 sind Polyoxypropylenamine und ihre Verwendung als Härter für Epoxidharze bekannt.

Aufgabe der vorliegenden Erfindung ist es, reaktive Schmelzklebstoffe der eingangs genannten Art dahingehend zu verbessern, daß sie ein gewisses Maß an Flexibilität und eine erhöhte Schälfestigkeit aufweisen. Die Verbesserung soll ohne Beeinträchtigung der Zugscherfestigkeit erzielt werden. Die reaktiven Schmelzklebstoffe sollen vor dem Aushärten eine ausreichende Auswaschbeständigkeit haben.

Zur Aufgabe der Erfindung gehört auch die Schaffung eines Harzes, das als Ausgangsmaterial bzw. Zwischenprodukt für die Herstellung derartiger reaktiver Schmelzklebstoffe geeignet ist.

Die Aufgabe wird erfindungsgemäß durch einen reaktiven Schmelzklebstoff der eingangs bezeichneten Art gelöst, der dadurch gekennzeichnet ist, daß die Harzkomponente durch Umsetzung von
a) einem beim Raumtemperatur festen Epoxidharz und
b) einen beim Raumtemperatur flüssigen Epoxidharz mit
c) einem linearen Polyoxypropylen mit Amino-Endgruppen
erhältlich ist, wobei die Epoxidharze a) und b) in einer solchen Menge, bezogen auf das Polyoxypropylen mit Amino-Endgruppen eingesetzt werden, daß ein Überschuß an Epoxidgruppen, bezogen auf die Aminogruppen, gewährleistet ist.

An dieser Stelle sei darauf hingewiesen, daß die Komponenten a), b) und c) auch Gemische von Materialien der jeweiligen Art sein können.

Der erfindungsgemäße Klebstoff führt bei hoher Zugscherfestigkeit zu guter Winkelschälfestigkeit.

Er weist im ausgehärteten Zustand das insbesondere bei der Automobilherstellung erforderliche Maß an Flexibilität auf. Die Flexibilität des Harzes läßt sich einstellen, indem man lineare Polyoxypropylene mit Amino-Endgruppen unterschiedlicher Kettenlänge verwendet und indem man das Mengenverhältnis von Epoxidharz zu linearem Polyoxypropylen mit Amino-Endgruppen verändert. Je größer die Kettenlänge des linearen Polyoxypropylens mit Amino-Endgruppen ist, um so größer ist die Flexibilität des erhaltenen Harzes. Auch eine Erhöhung des Anteils an linearem Polyoxypropylen mit Amino-Endgruppen bei der Herstellung der Harzkomponente führt zu einer Erhöhung der Flexibilität.

Die Härte des reaktiven Schmelzklebstoffes im erkalteten Zustand, d.h. insbesondere nach dem Auftragen, aber vor der Aushärtung, hängt vom Verhältnis von festem Epoxidharz a) zu flüssigem Epoxidharz b) ab. Je größer der Anteil an festem Epoxidharz a) ist, um so härter ist der erkaltete Schmelzklebstoff.

Es ist erfindungsgemäß wesentlich, daß bei der Umsetzung der Epoxidharze mit dem linearen Polyoxypropylen mit Amino-Endgruppen ein großer Überschuß an Epoxidgruppen, bezogen auf die Aminogruppen, vorhanden ist, so daß letztere vollständig mit Epoxidgruppen abreagieren. Typischerweise ist ein 5- bis 10-facher Überschuß, beispielsweise ein 7,5-facher Überschuß vorhanden.

Als Epoxidharze sind erfindungsgemäß im Prinzip alle im Handel erhältlichen Produkte geeignet. Vorzugsweise werden Epoxidharze verwendet, die aus Bisphenol A und/oder Bisphenol F und Epichlorhydrin erhältlich sind.

Das Epoxidharz a) muß ein ausreichend hohes Molekulargewicht aufweisen, damit es bei Raumtemperatur fest ist. Vorzugsweise hat dieses Harz ein Epoxid-Äquivalentgewicht von 400 bis 550, besonders bevorzugt von 450 bis 500.

Das Epoxidharz b) muß ein hinreichend niedriges Molekulargewicht aufweisen, damit es bei Raumtemperatur flüssig ist. Vorzugsweise hat dieses Harz ein Epoxid-Äquivalentgewicht von 150 bis 220, besonders bevorzugt von 182 bis 192.

Das lineare Polyoxypropylen mit Amino-Endgruppen ist eine Verbindung, die im wesentlichen der folgenden Formel entspricht:

H₂NCH(CH₃)CH₂[OCH₂CH(CH₃)]ₓNH₂.

In dieser Formel ist x vorzugsweise im Durchschnitt 28 bis 38, besonders bevorzugt 31 bis 35. Ein besonders bevorzugtes lineares Polyoxypropylen mit Amino-Endgruppen hat ein Molekulargewicht von etwa 2000.

Wie bereits erwähnt, können die Eigenschaften des reaktiven Schmelzklebstoffes dadurch verändert werden, daß man das Verhältnis der Komponenten a), b) und c) bei der Herstellung verändert. Üblicherweise werden etwa 20 bis 70 Gew.% des bei Raumtemperatur festen Epoxidharzes und etwa 15 bis 40 Gew.% des bei Raumtemperatur flüssigen Epoxidharzes mit etwa 10 bis 40 Gew.% des linearen Polyoxypropylens mit Amino-End-gruppen umgesetzt. Dabei ist in jedem Fall darauf zu achten, daß der erfindungsgemäß wesentliche Überschuß an Epoxidgruppen, bezogen auf die Aminogruppen, gewährleistet ist.

Als thermisch aktivierbare latente Härter sind alle Verbindungen und Mischungen von Verbindungen geeignet, die für diesen Zweck in Epoxidharzen einsetzbar sind. Bei der Auswahl des Härters ist allerdings zu beachten, daß die Aktivierung erst bei einer Temperatur erfolgen soll, die deutlich oberhalb des Erweichungspunktes des reaktiven Schmelzklebstoffs, beispielsweise mindestens 50^{o}C oder mindestens 100^{o}C oberhalb des Erweichungspunkts liegt. Dies ist einerseits im Hinblick auf die Herstellung des reaktiven Schmelzklebstoffs und andererseits im Hinblick auf dessen Anwendung erforderlich. Ein erfindungsgemäß bevorzugter latenter Härter ist Dicyandiamid.

Bei dem erfindungsgemäßen Verfahren zur Herstellung des reaktiven Schmelzklebstoffs wird zunächst in einer ersten Stufe die Harzkomponente hergestellt. Zu diesem Zweck werden das feste Epoxidharz a) und das flüssige Epoxidharz b) mit dem linearen Polyoxypropylen mit Amino-Endgruppen c) in dem gewünschten Mengenverhältnis umgesetzt. Die Reaktion erfolgt bei erhöhter Temperatur, vorzugsweise bei 90 bis 130°C, beispielsweise bei etwa 120°C während 3 Stunden.

Das so erhaltene Harz ist ein neuer Stoff. Das Harz ist bei Raumtemperatur fest. Es kann unmittelbar zum reaktiven Schmelzklebstoff weiterverarbeitet werden. Es ist aber auch möglich, das Harz auf Vorrat herzustellen und bis zur Weiterverarbeitung zu lagern.

Zur Weiterverarbeitung ist es zunächst erforderlich, das Harz zu erwärmen, um seine Viskosität so weit zu erniedrigen, daß es mit den weiteren Bestandteilen des reaktiven Schmelzklebstoffs vermischt werden kann. Vorzugsweise wird das Harz auf eine Temperatur oberhalb von 50°C, beispielsweise 60 bis 110°C, insbesondere 70 bis 95°C erwärmt. Dabei ist darauf zu achten, daß nicht bis auf eine Temperatur erwärmt wird, bei der der zuzusetzende latente Härter aktiviert werden würde. Zur Erwärmung des Harzes und zur Vermischung mit den übrigen Bestandteilen des reaktiven Schmelzklebstoffs wird zweckmäßigerweise ein heizbarer Kneter verwendet. Es ist bevorzugt, daß der latente Härter zuletzt nach den übrigen Bestandteilen in die Mischung eingearbeitet wird. Dabei ist weiterhin bevorzugt, daß das Gemisch vor dem Zusatz des latenten Härters auf eine Temperatur an der unteren Grenze des für die Verarbeitung geeigneten Temperaturbereichs abgekühlt wird.

Der erfindungsgemäße reaktive Schmelzklebstoff ist zum Verkleben von Teilen aus unterschiedlichen Materialien geeignet. Vorzugsweise wird er zum Verkleben von Metallteilen und insbesondere zum Verkleben von Stahlblechen eingesetzt.

Üblicherweise wird der Klebstoff ais Schmelze einseitig, d.h. auf eines der beiden miteinander zu verklebenden Teile aufgetragen. Wiederum ist darauf zu achten, daß der Klebstoff nur bis auf eine Temperatur erwärmt wird, bei der der latente Härter noch nicht aktiviert wird. Die beiden Teile werden unmittelbar nach dem Auftragen der Klebstoffschmelze zusammengefügt; beim Abkühlen erstarrt der Klebstoff und verbindet die beiden Teile vorläufig miteinander.

Die so erhaltene Verbindung hat schon eine gewisse Beständigkeit. Beispielsweise wird der noch ungehärtete Klebstoff nicht ausgewaschen, wenn die so vorläufig miteinander verbundenen Bleche zur Entfettung in Waschbehältern und anschließend in Phosphatierbädern behandelt werden.

Die Härtung des Klebstoffs erfolgt schließlich in einem Ofen bei einer Temperatur, die deutlich oberhalb der Temperatur liegt, bei der die Klebstoffschmelze auf die zu verbindenden Teile aufgetragen wurde. Vorzugsweise erfolgt die Härtung bei einer Temperatur oberhalb von 150°C, beispielsweise bei etwa 180°C während ca. 30 Minuten.

Im folgenden wird die Erfindung anhand von Beispielen näher erläutert. Es werden die folgenden Abkürzungen verwendet:
- EEW:: Epoxid-Äquivalentgewicht
- ZSF:: Zugscherfestigkeit
- WSF:: Winkelschälfestigkeit

Soweit nicht anders angegeben, sind alle Mengenangaben in Gewichtsprozent.

Als festes Epoxidharz a) wurde in den Beispielen ein aus Bisphenol A und Epichlorhydrin hergestelltes Produkt verwendet. Dieses hatte einen durchschnittliches zahlenmäßiges Molekulargewicht von etwa 900. Der Epoxidgruppengehalt lag bei 2000 bis 2220 mMol/kg entsprechend einem Epoxid-Äquivalentgewicht von 450 bis 500. Die Erweichungstemperatur (Kofler) dieses festen Epoxidharzes lag bei 50 bis 70^{o}C. Das Harz hatte eine Dichte bei 25^{o}C von 1,19 g/ml.

Als flüssige Epoxidharze wurden in den Beispielen zwei verschiedene Produkte b1) und b2) verwendet.

Das flüssige Epoxidharz b1) hatte ein Epoxid-Äquivalentgewicht von 177 bis 188. Die Viskosität bei 25°C betrug 7000 bis 10 000 mPa.s. Das Harz hatte eine Dichte bei 25^{o}C von 1,16 g/ml.

Das flüssige Epoxidharz b2) hatte ein Epoxid-Äquivalentgewicht von 182 bis 192. Seine Viskosität bei 25^{o}C betrug 11 000 bis 14 000 mPa.s. Die Dichte lag auch in diesem Fall bei 1,16 g/ml.

Als lineares Polyoxypropylenglykol mit Amino-Endgruppen c) wurde in den Beispielen ein Produkt verwendet, das ein durchschnittliches Molekulargewicht von etwa 2000 aufwies. Die Viskosität bei 25^{o}C lag bei 280 mPa.s. Das aktivierte Wasserstoff-Äquivalent des Amins betrug etwa 500.

Die in den Beispielen angegebenen Viskositätswerte wurden mit dem Rheomat bestimmt. Es wurden jeweils drei Messungen auf den Betriebsstufen 10, 12 und 15 vorgenommen.

Die in den Beispielen angegebenen Zugscherfestigkeiten wurden im Zugscherversuch nach DIN 53283 bestimmt. Die Bestimmung wurde bei Prüftemperaturen von +20^{o}C, +80^{o}C und -35^{o}C durchgeführt. Eine weitere Bestimmung wurde bei +20^{o}C durchgeführt, nachdem die jeweilige Probe 10 Tage lang bei 40°C unter 100% relativer Luftfeuchtigkeit gelagert worden war. Schließlich wurde noch eine Bestimmung bei 20^{o}C durchgeführt, nachdem die jeweilige Probe 20 Tage lang einem Salzsprühtest nach DIN 50021 unterworfen worden war.

Die in den Beispielen angegebene Winkelschälfestigkeit wurde im Winkelschälversuch nach DIN 53282 bestimmt. Es ist der aus dem Plateau des Schäldiagramms ermittelte Schälwiderstand angegeben. Der Anrißschälwiderstand wurde nur in einem Einzelfall zur Orientierung ermittelt, wobei ein Wert von 115,8 ± 14,3 N/mm erhalten wurde.

### Beispiel 1

### Herstellung eines Harzes durch Umsetzung von festem Epoxidharz a) und flüssigem Epoxidharz b1) mit Polyoxypropylen mit Amino-Endgruppen c).

28,8 Gewichtsteile flüssiges Epoxidharz b1) wurden in einem temperaturkontrollierten Glas- oder Stahlreaktor vorgelegt und auf ca. 100^{o}C erwärmt. 39,5 Gewichtsteile festes Epoxidharz a) wurden in Schuppenform auf einmal zugegeben und unter Rühren geschmolzen. Zu dieser Schmelze wurde das Polyoxypropylen mit Amino-Endgruppen rasch zugegeben. Die Reaktion war schwach exotherm, wodurch sich die Mischung auf ca. 120^{o}C erwärmte. Die Mischung wurde etwa 3 Stunden lang bei dieser Temperatur gehalten. Nach dieser Zeit wurde sie entweder warm zur Weiterverarbeitung gegeben oder zur Lagerung in ein Vorratsgefäß abgelassen.

Das so erhaltene Harz hatte ein Epoxid-Äquivalentgewicht von 570. Die Viskosität bei 80°C wurde mit dem Rheomat auf den Stufen 10, 12 und 15 zu 47 Pa.s, 48 Pa.s und 50 Pa.s bestimmt. Bei der Herstellung dieses Harzes wurde ein 7,5-facher Überschuß an Epoxidgruppen, bezogen auf die Aminogruppen, eingesetzt.

### Beispiele 2 bis 6

### Herstellung weiterer Harze durch Umsetzung von festem und flüssigem Epoxidharz mit Polyoxypropylen mit Amino-Endgruppen.

Beispiel 1 wurde mit dem Unterschied mehrfach wiederholt, daß anstelle des flüssigen Epoxidharzes b1) das flüssige Epoxidharz b2) verwendet und das Mengenverhältnis zwischen den Komponenten a), b2) und c) variiert wurde.

Die eingesetzten Mengen der Ausgangsmaterialien und die an den jeweils erhaltenen Harzen bestimmten Meßergebnisse sind in der Tabelle I zusammengefaßt.

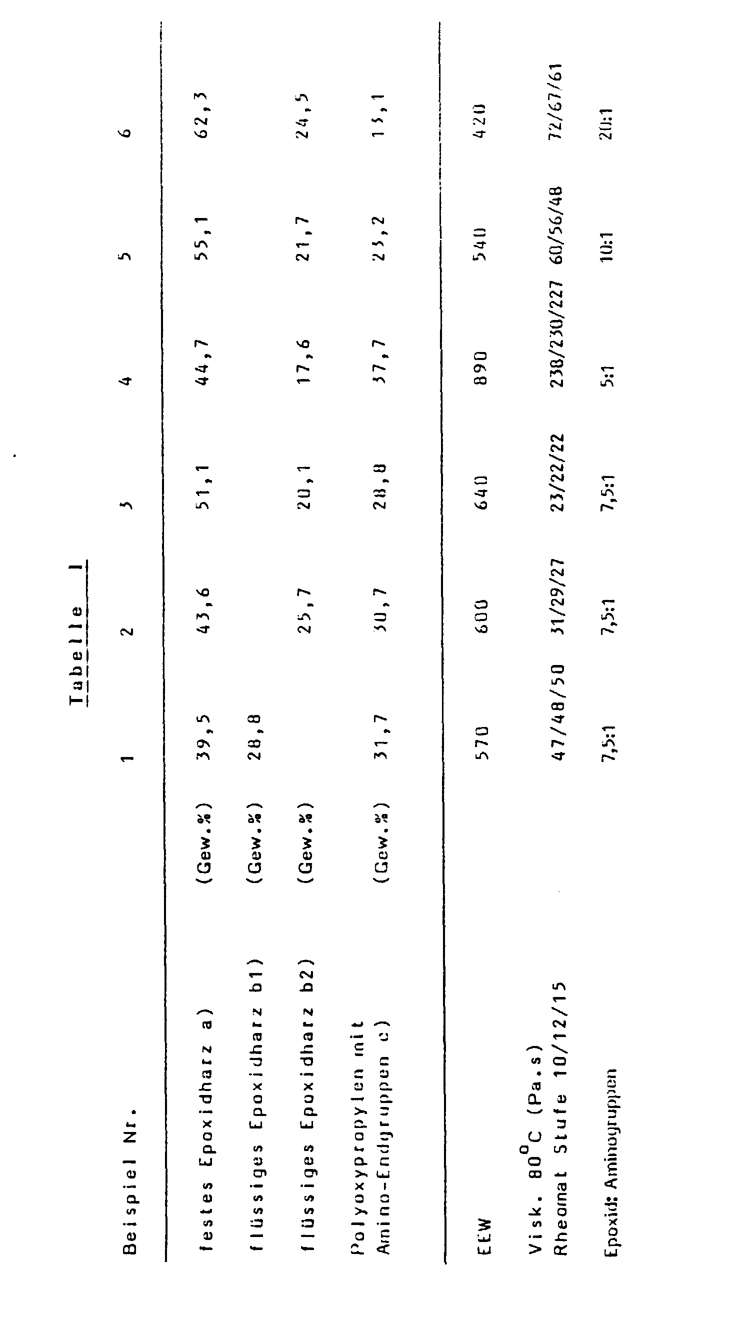

### Beispiele 7 bis 11

### Herstellung von Schmelzklebstoffen

Jeweils 60 Gewichtsteile der in den Beispielen 1, 2 bzw. 3 hergestellten Harze wurden in einem heizbaren Kneter auf eine Temperatur zwischen 70 und 95^{o}C erwärmt. Die im Einzelfall innerhalb dieses Bereiches gewählte Temperatur hing von der Viskosität des Harzes ab. Dann wurden als Füllstoff ein Magnesium-Aluminium-Silikat und als Thixotropiehilfsmitel pyrogene Kieselsäure bzw. Ruß zugesetzt. Die jeweils eingesetzten Mengen dieser Zusatzstoffe sind in der Tabelle II angegeben. Nun wurde das Gemisch auf etwa 70^{o}C abgekühlt, und es wurden als latenter Härter 2,5 Gewichtsteile Dicyandiamid und als Beschleunigerpaste 0,5 Gewichtsteile eines Harnstoffderivats zugegeben. Das Gemisch wurde im Kneter homogen und glatt gemischt. Anschließend wurde das Produkt dann warm abgefüllt.

In der Tabelle II sind neben der Zusammensetzung der in den Beispielen 7 bis 11 hergestellten Schmelzklebstoffe deren Viskosität bei 80^{o}C, die unter verschiedenen Bedingungen ermittelte Zugscherfestigkeit sowie der Schälwiderstand angegeben.

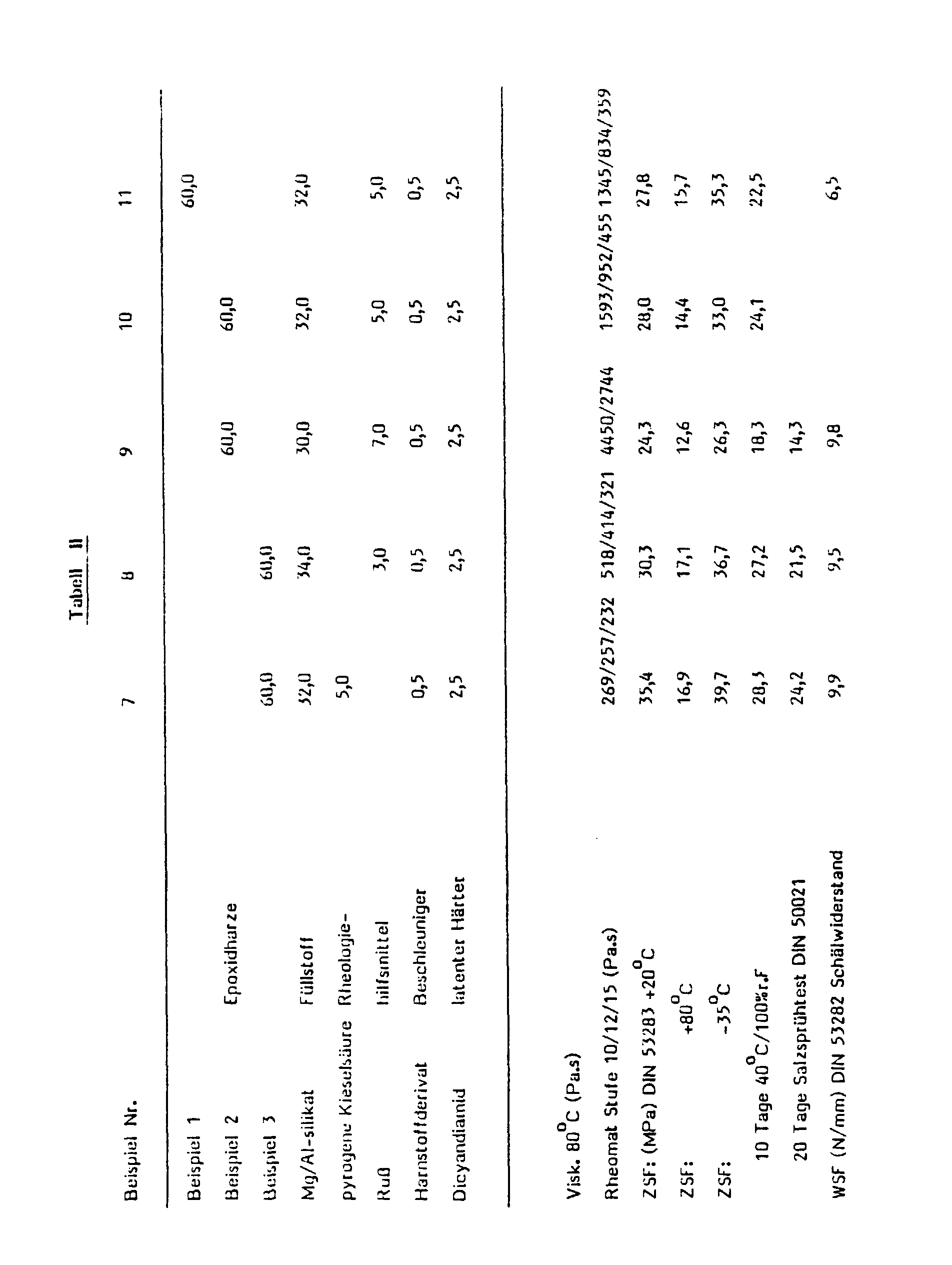

## Patentansprüche

1. Reaktiver Schmelzklebstoff, der eine Harzkomponente, mindestens einen thermisch aktivierbaren latenten Härter für die Harzkomponente sowie gegebenenfalls Beschleuniger, Füllstoffe, Thixotropiehilfsmittel und weitere übliche Zusatzstoffe enthält, **dadurch gekennzeichnet,** daß die Harzkomponente durch Umsetzung von
a) einem bei Raumtemperatur festen Epoxidharz und
b) einem bei Raumtemperatur flüssigen Epoxidharz mit
c) einem linearen Polyoxypropylen mit Amino-Endgruppen
erhältlich ist, wobei die Epoxidharze a) und b) in einer solchen Menge, bezogen auf das Polyoxypropylen mit Amino-Endgruppen, eingesetzt werden, daß ein großer Überschuß an Epoxidgruppen, bezogen auf die Aminogruppen, gewährleistet ist, so daß letztere vollständig mit Epoxidgruppen abreagieren.

2. Reaktiver Schmelzklebstoff nach Anspruch 1, **dadurch gekennzeichnet,** daß ein 5- bis 10-facher Überschuß an Epoxidgruppen, bezogen auf die Aminogruppen, gewährleistet ist.

3. Reaktiver Schmelzklebstoff nach Anspruch 1 oder 2, **dadurch gekennzeichnet,** daß die Komponenten a) und b) Epoxidharze sind, die aus Bisphenol A und/oder Bisphenol F und Epichlorhydrin erhältlich sind.

4. Reaktiver Schmelzklebstoff nach einem der vorhergehenden Ansprüche, **dadurch gekennzeichnet,** daß das feste Epoxidharz a) ein Epoxid-Äquivalentgewicht von 400 bis 550 hat.

5. Reaktiver Schmelzklebstoff nach Anspruch 4, **dadurch gekennzeichnet,** daß das feste Epoxidharz a) ein Epoxid-Äquivalentgewicht von 450 bis 500 hat.

6. Reaktiver Schmelzklebstoff nach einem der vorhergehenden Ansprüche, **dadurch gekennzeichnet,** daß das flüssige Epoxidharz b) ein Epoxid-Äquivalentgewicht von 150 bis 220 hat.

7. Reaktiver Schmelzklebstoff nach Anspruch 6, **dadurch gekennzeichnet,** daß das flüssige Epoxidharz b) ein Epoxid-Äquivalentgewicht von 182 bis 192 hat.

8. Reaktiver Schmelzklebstoff nach einem der vorhergehenden Ansprüche, **dadurch gekennzeichnet,** daß die Komponente c) der Formel
H₂NCH(CH₃)CH₂[OCH₂CH(CH₃)]ₓNH₂
entspricht, in der x im Durchschnitt 28 bis 38 ist.

9. Reaktiver Schmelzklebstoff nach einem der vorhergehenden Ansprüche, **dadurch gekennzeichnet,** daß er durch Umsetzung von
a) 20 bis 70 Gew.% des bei Raumtemperatur festen Epoxidharzes und
b) 15 bis 40 Gew.% des bei Raumtemperatur flüssigen Epoxidharzes mit
c) 10 bis 40 Gew.% des linearen Polyoxypropylens mit Amino-Endgruppen erhältlich ist.

10. Reaktiver Schmelzklebstoff nach einem der vorhergehenden Ansprüche, **dadurch gekennzeichnet,** daß der latente Härter Dicyandiamid ist.

11. Verfahren zur Herstellung des reaktiven Schmelzklebstoffs gemäß den Ansprüchen 1 bis 10, **dadurch gekennzeichnet,** daß man
A)
a) ein bei Raumtemperatur festes Epoxidharz und
b) ein bei Raumptemperatur flüssiges Epoxidharz mit
c) einem linearen Polyoxypropylen mit Amino-Endgruppen
zu einer Harzkomponente umsetzt, wobei man die Epoxidharze a) und b) in einer solchen Menge, bezogen auf das Polyoxypropylen mit Amino-Endgruppen einsetzt, daß ein großer Überschuß an Epoxidgruppen, bezogen auf die Aminogruppen, gewährleistet ist, so daß letztere vollständig mit Epoxidgruppen abreagieren, und
B) die Harzkomponente anschließend bei einer erhöhten Temperatur, die unterhalb der Temperatur liegt, bei welcher der latente Härter aktiviert wird, als Schmelze mit dem latenten Härter sowie gegebenenfalls Beschleunigern, Füllstoffen, Thixotropiehilfsmitteln und weiteren üblichen Zusatzstoffen vermischt.

12. Verfahren nach Anspruch 11, **dadurch gekennzeichnet,** daß man die Umsetzung A) bei einer Temperatur im Bereich von 90 bis 130°C durchführt.

13. Verfahren nach Anspruch 11 oder 12, **dadurch gekenn zeichnet**, daß man das Vermischen B) bei Temperaturen im Bereich von 60 bis 110°C durchführt.

14. Verfahren nach einem der Ansprüche 11 bis 13, **dadurch gekennzeichnet,** daß man den latenten Härter als letzten Bestandteil zumischt.

15. Verwendung des reaktiven Schmelzklebstoffs gemäß einem der Ansprüche 1 bis 10 zum Verkleben zweier Teile.

16. Verwendung nach Anspruch 15, **dadurch gekennzeichnet,** daß man
A) den Klebstoff als Schmelze bei einer Temperatur, die unterhalb der Temperatur liegt, bei welcher der latente Härter aktiviert wird, auf eines der zu verklebenden Teile aufträgt und die Teile zusammenfügt, so daß sie bei Abkühlung unter Erstarren des Klebstoffs vorläufig miteinander verbunden sind, und
B) den Klebstoff im Ofen bei einer Temperatur härtet, die oberhalb der Temperatur liegt, bei welcher der latente Härter aktiviert wird.

17. Verwendung nach Anspruch 15 oder 16, **dadurch gekennzeichnet,** daß man den Klebstoff bei einer Temperatur oberhalb von 150°C härtet.

18. Verwendung nach einem der Ansprüche 15 bis 17 des reaktiven Schmelzklebstoffs zum Verkleben von Stahlblechen.

19. Bei Raumtemperatur festes Harz für die Herstellung von Schmelzklebstoffen, erhältlich durch Umsetzung von
a) 20 bis 70 Gew.-% eines bei Raumtemperatur festen Epoxidharzes und
b) 15 bis 40 Gew.-% eines bei Raumtemperatur flüssigen Epoxidharzes, mit
c) 10 bis 40 Gew.-% eines linearen Polyoxypropylens mit Amino-Endgruppen, wobei
die Epoxidharze a) und b) in einer solchen Menge, bezogen auf das Polyoxypropylen mit Amino-Endgruppen eingesetzt werden, daß ein großer Überschuß an Epoxidgruppen, bezogen auf die Aminogruppen, gewährleistet ist, so daß letztere vollständig mit Epoxidgruppen abreagieren.

20. Harz gemäß Anspruch 19, **dadurch gekennzeichnet,** daß ein 5- bis 10-facher Überschuß an Epoxidgruppen, bezogen auf die Aminogruppen, gewährleistet ist.

21. Harz gemäß Anspruch 19 oder 20, **dadurch gekennzeichnet,** daß die Komponenten a) und b) Epoxidharze sind, die aus Bisphenol A und/oder Bisphenol F und Epichlorhydrin erhältlich sind.

22. Harz gemäß einem der Ansprüche 19 bis 21, **dadurch gekennzeichnet,** daß das feste Epoxidharz a) ein Epoxid-Äquivalentgewicht von 400 bis 550 hat.

23. Harz gemäß Anspruch 22, **dadurch gekennzeichnet,** daß das feste Epoxidharz a) ein Epoxid-Äquivalentgewicht von 450 bis 500 hat.

24. Harz gemäß einem der Ansprüche 19 bis 23, **dadurch gekennzeichnet**, daß das flüssige Epoxidharz b) ein Epoxid-Äquivalentgewicht von 150 bis 220 hat.

25. Harz gemäß einem der Ansprüche 19 bis 24, **dadurch gekennzeichnet,** daß das flüssige Epoxidharz b) ein Epoxid-Äquivalentgewicht von 182 bis 192 hat.

26. Harz gemäß einem der Ansprüche 19 bis 25, **dadurch gekennzeichnet,** daß die Komponente c) der Formel
H₂NCH(CH₃)CH₂[OCH₂CH(CH₃)]1ₓNH₂
entspricht, in der x im Durchschnitt 28 bis 38 ist.

27. Harz gemäß Anspruch 26, **dadurch gekennzeichnet,** daß x im Durchschnitt 31 bis 35 ist.

28. Verfahren zur Herstellung des Harzes gemäß einem der Ansprüche 19 bis 27, **dadurch gekennzeichnet,** daß man
A)
a) 20 bis 70 Gew.-% eines bei Raumtemperatur festen Epoxidharzes und
b) 15 bis 40 Gew.-% eines bei Raumtemperatur flüssigen Epoxidharzes mit
c) 10 bis 40 Gew.-% eines linearen Polyoxypropylens mit Amino-Endgruppen umsetzt, wobei man die Epoxidharze a) und b) in einer solchen Menge, bezogen auf das Polyoxypropylen mit Amino-Endgruppen einsetzt, daß ein großer Überschuß an Epoxidgruppen. bezogen auf die Aminogruppen, gewährleistet ist, so daß letztere vollständig mit Epoxidgruppen abreagieren.

29. Verfahren nach Anspruch 28, **dadurch gekennzeichnet,** daß man die Umsetzung bei einer Temperatur im Bereich von 90 bis 130 °C durchführt.

30. Verwendung des Harzes gemäß einem der Ansprüche 19 bis 27 zur Herstellung eines reaktiven Schmelzklebstoffs.

## Claims

1. A reactive hotmelt adhesive containing a resin component, at least one heat-activatable latent hardener for the resin component and optionally accelerators, fillers, thixotropicizing agents and other typical additives, characterized in that the resin component is obtainable by reaction of
a) an epoxy resin solid at room temperature and
b) an epoxy resin liquid at room temperature with
c) a linear amino-terminated polyoxypropylene,
the epoxy resins a) and b) being used in such a quantity, based on the amino-terminated polyoxypropylene, that a large excess of epoxy groups, based on the amino groups, is guaranteed so that the amino groups react off completely with epoxy groups.

2. A reactive hotmelt adhesive as claimed in claim 1, characterized in that a 5- to 10-fold excess of epoxy groups, based on the amino groups, is guaranteed.

3. A reactive hotmelt adhesive as claimed in claim 1 or 2, characterized in that components a) and b) are epoxy resins obtainable from bisphenol A and/or bisphenol F and epichlorohydrin.

4. A reactive hotmelt adhesive as claimed in any of the preceding claims, characterized in that the solid epoxy resin a) has an epoxy equivalent weight of 400 to 550.

5. A reactive hotmelt adhesive as claimed in claim 4, characterized in that the solid epoxy resin a) has an epoxy equivalent weight of 450 to 500.

6. A reactive hotmelt adhesive as claimed in any of the preceding claims, characterized in that the liquid epoxy resin b) has an epoxy equivalent weight of 150 to 220.

7. A reactive hotmelt adhesive as claimed in claim 6, characterized in that the liquid epoxy resin b) has an epoxy equivalent weight of 182 to 192.

8. A reactive hotmelt adhesive as claimed in any of the preceding claims, characterized in that component c) corresponds to the following formula:
H₂NCH(CH₃)CH₂[OCH₂CH(CH₃)]ₓNH₂
in which x has an average value of 28 to 38.

9. A reactive hotmelt adhesive as claimed in any of the preceding claims, characterized in that it is obtainable by reaction of
a) 20 to 70% by weight of the epoxy resin solid at room temperature and
b) 15 to 40% by weight of the epoxy resin liquid at room temperature with
c) 10 to 40% by weight of the linear amino-terminated polyoxypropylene.

10. A reactive hotmelt adhesive as claimed in any of the preceding claims, characterized in that the latent hardener is dicyanodiamide.

11. A process for the production of the reactive hotmelt adhesive claimed in claims 1 to 10, characterized in that
A)
a) an epoxy resin solid at room temperature and
b) an epoxy resin liquid at room temperature are reacted with
c) a linear amino-terminated polyoxypropylene
to form a resin component, the epoxy resins a) and b) being used in such a quantity, based on the amino-terminated polyoxypropylene, that a large excess of epoxy groups, based on the amino groups, is guaranteed so that the amino groups react off completely with epoxy groups, and
B) the resin component is then mixed as a melt with the latent hardener and optionally accelerators, fillers, thixotropicizing agents and other typical additives at an elevated temperature which is below the temperature at which the latent hardener is activated.

12. A process as claimed in claim 11, characterized in that the reaction A) is carried out at a temperature of 90 to 130°C.

13. A process as claimed in claim 11 or 12, characterized in that the mixing step B) is carried out at temperatures of 60 to 110°C.

14. A process as claimed in any of claims 11 to 13, characterized in that the latent hardener is added as the last constituent.

15. The use of the reactive hotmelt adhesive claimed in any of claims 1 to 10 for bonding two parts.

16. The use claimed in claim 15, characterized in that
A) the adhesive is applied as a melt to one of the parts to be joined at a temperature below the temperature at which the latent hardener is activated and the parts are fitted together so that, on cooling, they are temporarily joined together by hardening of the adhesive and
B) the adhesive is oven-cured at a temperature above the temperature at which the latent hardener is activated.

17. The use claimed in claim 15 or 16, characterized in that the adhesive is cured at a temperature above 150°C.

18. The use claimed in any of claims 15 to 17 of the reactive hotmelt adhesive for bonding steel plates.

19. A resin solid at room temperature for the production of hotmelt adhesives obtainable by reaction of
a) 20 to 70% by weight of an epoxy resin solid at room temperature and
b) 15 to 40% by weight of an epoxy resin liquid at room temperature with
c) 10 to 40% by weight of a linear amino-terminated polyoxypropylene,
the epoxy resins a) and b) being used in such a quantity, based on the amino-terminated polyoxypropylene, that a large excess of epoxy groups, based on the amino groups, is guaranteed so that the amino groups react off completely with epoxy groups.

20. A resin as claimed in claim 19, characterized in that a 5- to 10-fold excess of epoxy groups, based on the amino groups, is guaranteed.

21. A resin as claimed in claim 19 or 20, characterized in that components a) and b) are epoxy resins obtainable from bisphenol A and/or bisphenol F and epichlorohydrin.

22. A resin as claimed in any of the claims 19 to 21, characterized in that the solid epoxy resin a) has an epoxy equivalent weight of 400 to 550.

23. A resin as claimed in claim 22, characterized in that the solid epoxy resin a) has an epoxy equivalent weight of 450 to 500.

24. A resin as claimed in any of claims 19 to 23, characterized in that the liquid epoxy resin b) has an epoxy equivalent weight of 150 to 220.

25. A resin as claimed in any of claims 19 to 24, characterized in that the liquid epoxy resin b) has an epoxy equivalent weight of 182 to 192.

26. A resin as claimed in any of claims 19 to 25, characterized in that component c) corresponds to the following formula:
H₂NCH(CH₃)CH₂[OCH₂CH(CH₃)]ₓNH₂
in which x has an average value of 28 to 38.

27. A resin as claimed in claim 26, characterized in that x has an average value of 31 to 35.

28. A process for the production of the resin claimed in any of claims 19 to 27, characterized in that
A)
a) 20 to 70% by weight of an epoxy resin solid at room temperature and
b) 15 to 40% by weight of an epoxy resin liquid at room temperature are reacted with
c) 10 to 40% by weight of a linear amino-terminated polyoxypropylene
to form a resin component, the epoxy resins a) and b) being used in such a quantity, based on the amino-terminated polyoxypropylene, that a large excess of epoxy groups, based on the amino groups, is guaranteed so that the amino groups react off completely with epoxy groups.

29. A process as claimed in claim 28, characterized in that the reaction is carried out at a temperature of 90 to 130°C.

30. The use of the resin claimed in any of claims 19 to 27 for the production of a reactive hotmelt adhesive.

## Revendications

1. Colle fusible réactive, contenant un composant de résine, au moins un durcisseur lateht activable par voie thermique pour le composant de résine, ainsi que, le cas échéant, des accélérateurs, des charges, des agents auxiliaires thixotropiques et d'autres adjuvants usuels, caractérisée en ce que le composant de résine est obtenu par conversion d'
a) une résine époxyde solide à la température ambiante, et
b) une résine époxyde liquide à la température ambiante, avec
c) un polyoxypropylène linéaire comportant des groupes terminaux amino,
les résines époxydes a) et b) étant mises en oeuvre en une quantité telle, en se référant au polyoxypropylène ayant des groupes terminaux amino, qu'un grand excès de groupes époxydes, en se référant aux groupes amino, soit assuré, de manière que ces-derniers réagissent complètement avec des groupes époxydes.

2. Colle fusible réactive selon la revendication 1,
caractérisée en ce qu'
est assuré un excès quintuple à décuple en groupes époxydes, en se référant aux groupes amino.

3. Colle fusible réactive selon la revendication 1 ou 2,
caractérisée en ce que
les composants a) et b) sont des résines époxydes, qui peuvent être obtenues à partir de bisphénol A et/ou de bisphénol F et d'épichlorhydrine.

4. Colle fusible réactive selon l'une des revendications précédentes,
caractérisée en ce que
la résine époxyde solide a) a un poids équivalent d'époxyde de 400 à 550.

5. Colle fusible réactive selon la revendication 4,
caractérisée en ce que
la résine époxyde solide a) a un poids équivalent d'époxyde de 450 à 500.

6. Colle fusible réactive selon l'une des revendications précédentes,
caractérisée en ce que
la résine époxyde liquide b) a un poids équivalent d'époxyde de 150 à 220.

7. Colle fusible réactive selon la revendication 6,
caractérisée en ce que
la résine époxyde liquide b) a un poids équivalent d'époxyde de 182 à 192.

8. Colle fusible réactive selon l'une des revendications précédentes,
caractérisée en ce que
le composant c) correspond à la formule
H₂NCH(CH₃)CH₂[OCH₂CH(CH₃)]ₓNH₂
dans laquelle x est en moyenne de 28 à 38.

9. Colle fusible réactive selon l'une des revendications précédentes,
caractérisée en ce qu'
elle est obtenue par conversion de
a) 20 à 70 % en poids de la résine époxyde solide à la température ambiante, et
b) 15 à 40 % en poids de la résine époxyde liquide à la température ambiante, avec
c) 10 à 40 % en poids du polyoxypropylène linéaire ayant des groupes terminaux amino.

10. Colle fusible réactive selon l'une des revendications précédentes,
caractérisée en ce que
le durcisseur latent est du dicyandiamide.

11. Procédé de fabrication de la colle fusible réactive selon les revendications 1 à 10,
caractérisée en ce que
A) l'on convertit
A )une résine époxyde solide à la température ambiante, et
b) une résine époxyde liquide à la température ambiante, avec
c) un polyoxypropylène linéaire ayant des groupes terminaux amino,
pour donner un composant de résine, les résines époxydes a) et b) étant utilisées en une quantité telle, en se référant au polyoxypropylène ayant des groupes terminaux amino, qu'un grand excès de groupes époxydes, en se référant aux groupes amino, est assuré, et si bien que ces derniers réagissent complètement avec les groupes époxydes, et
B) le composant de résine est ensuite mélangé à une température augmentée, inférieure à la température pour laquelle le durcisseur latent est activé, à titre de masse en fusion, au durcisseur latent, ainsi que, le cas échéant, aux accélérateurs, charges, agents auxiliaires thixotropiques et à d'autres adjuvants usuels.

12. Procédé selon la revendication 11,
caractérisé en ce qu'
on effectue la conversion A) à une température située dans la plage de 90 à 130°C.

13. Procédé selon la revendication 11 ou 12,
caractérisé en ce qu'
on effectue le mélange B) à des températures situées dans la plage de 60 à 110°C.

14. Procédé selon l'une des revendications 11 à 13,
caractérisé en ce qu'
on ajoute au mélange le durcisseur latent à titre de dernier composant.

15. Utilisation de la colle fusible réactive selon l'une des revendications 1 à 10 pour le collage de deux pièces.

16. Utilisation selon la revendication 15,
caractérisée en ce qu'
A) on applique la colle sous forme de masse fondue, à une température inférieure à la température pour laquelle le durcisseur latent est activé, l'application se faisant sur l'une des pièces à coller, et les pièces étant assemblées, de manière que, lors du refroidissement accompagné de solidification de la colle, elle soient reliées ensemble à titre provisoire, et
B) on durcit la colle dans un four, à une température supérieure à la température pour laquelle le durcisseur latent est activé.

17. Utilisation selon la revendication 15 ou 16,
caractérisée en ce qu'
on durcit la colle à une température supérieure à 150°C.

18. Utilisation selon l'une des revendications 15 à 17, de la colle fusible réactive pour le collage de tôles d'acier.

19. Résine solide à la température ambiante, pour la fabrication de colles fusibles, obtenues par conversion de :
a) 20 à 70 % en poids de la résine époxyde solide à la température ambiante, et
b) 15 à 40 % en poids de la résine époxyde liquide à la température ambiante, avec
c) 10 à 40 % en poids du polyoxypropylène linéaire ayant des groupes terminaux amino, les résines époxydes a) et b) étant mises en oeuvre en une quantité telle, en se référant au polyoxypropylène ayant des groupes terminaux amino, qu'un grand excès de groupes époxydes, en se référant aux groupes amino, est assuré, si bien que ces derniers réagissent complètement avec les groupes époxydes.

20. Résine selon la revendication 19,
caractérisée en ce qu'
est assuré un excès quintuple à décuple en groupes époxydes, en se référant aux groupes amino.

21. Résine selon la revendication 19 ou 20,
caractérisée en ce que
les composants a) et b) sont des résines époxydes, qui sont obtenues à partir de bisphénol A et/ou de bisphénol F et d'épichlorhydrine.

22. Résine selon l'une des revendications 19 à 21,
caractérisée en ce que
la résine époxyde solide a) a un poids équivalent époxyde de 400 à 550.

23. Résine selon la revendication 22,
caractérisée en ce que
la résine époxyde solide a) a un poids équivalent d'époxyde de 450 à 500.

24. Résine selon l'une des revendications 19 à 23,
caractérisée en ce que la résine époxyde liquide b) a un poids équivalent d'époxyde de 150 à 220.

25. Résine selon l'une des revendications 19 à 24,
caractérisée en ce que
la résine époxyde liquide b) a un poids équivalent d'époxyde de 182 à 192.

26. Résine selon l'une des revendications 19 à 25, caractérisée en ce que le composant c) correspond à la formule
H₂NCH(CH₃)CH₂[OCH₂CH(CH₃)]ₓNH₂
dans laquelle x est en moyenne de 28 à 38.

27. Résine selon la revendication 26,
caractérisée en ce que
x est en moyenne de 31 à 35.

28. Procédé de fabrication de résine selon l'une des revendications 19 à 27,
caractérisé en ce qu'
on convertit :
A)
a) de 20 à 70 % en poids de la résine époxyde solide à la température ambiante, et
b) de 15 à 40 % en poids de la résine époxyde liquide à la température ambiante, avec
c) de 10 à 40 % en poids du polyoxypropylène linéaire ayant des groupes terminaux amino, les résines
époxydes a) et b) étant mises en oeuvre en une quantité telle, en se référant au polyoxypropylène ayant des groupes terminaux amino, qu'un grand excès de groupes époxydes, en se référant aux groupes amino, est assuré, si bien que ces derniers réagissent complètement avec les groupes époxydes.

29. Procédé selon la revendication 28,
caractérisé en ce qu'
on effectue la conversion à une température située dans la plage de 90 à 130°C.

30. Utilisation de la résine selon l'une des revendications 19 à 27, pour la fabrication d'une colle fusible réactive.
